# EUROPEAN PATENT SPECIFICATION

(11) **EP 1 562 442 B1**
(45) Date of publication and mention of the grant of the patent: **04.04.2007**
(21) Application number: 03789051.4
(22) Date of filing: 18.11.2003
(51) Int. Cl.: A23J 3/14, A23J 3/18, A23J 3/34, A23J 3/16

(54) **PROCESS FOR PREPARING MICROBIAL STABLE PROTEIN SUSPENSIONS**
VERFAHREN ZUR HERSTELLUNG MIKROBIOLOGISCH STABILER PROTEINSUSPENSIONEN
PROCEDE DE PREPARATION DE SUSPENSIONS PROTEIQUES STABLES SUR LE PLAN MICROBIEN

(30) Priority: 22.11.2002 GB 0227248
(43) Date of publication of application: 17.08.2005
(73) Proprietor: Cerestar Holding B.V., 4551 LA Sas Van Gent (NL)
(72) Inventor: BOSSARD, Fabienne, Nicole, Marie-Pierre, B-1000 Bruxelles (BE); COOMANS, Sonia, Marianne, Jeannine, B-1800 Vilvoorde (BE); DE SADELEER, Jos, Willy, Ghislain, Corneel, B-3220 Holsbeek (BE); VERCOUTEREN, Jacobus, Stephanus, NL-4551 VV Sas van Gent (NL)
(74) Representative: Wilkinson, Stephen John
(86) International application number: PCT/EP2003/012878
(87) International publication number: WO 2004/047549

(56) References cited:
- EP-A- 0 934 700
- EP-A- 1 066 759
- WO-A-02/078461
- DE-A- 19 907 726
- GB-A- 1 110 529
- US-A- 3 761 353
- US-A- 4 129 664
- US-A- 4 882 180
- US-A- 5 145 702
- US-A- 5 736 178
- US-A- 6 063 414
- US-B1- 6 197 353
- US-B1- 6 251 443
- "Storage stable soybean protein." RESEARCH DISCLOSURE 1981, no. 20151, XP002237194
- DATABASE WPI Section Ch, Week 200123 Derwent Publications Ltd., London, GB; Class D13, AN 2001-220803 XP002237195 & JP 2001 017119 A (NISSHIN OIL MILLS LTD) , 23 January 2001 (2001-01-23)

## Description

### Technical Field

The present invention relates to a process for preparing vegetable protein suspensions which are microbial stable without the addition of any preservatives, and with water activity of from 0.50 to 0.90. The invention further relates to their use in food, feed and cosmetic products.

### Background of the Invention

Vegetable proteins are used in diverse applications going from food to non-food applications. Currently these vegetable proteins are mainly available in a dried powder form. The corresponding liquid solutions are either highly diluted or preservatives are added for obtaining stability.

US 5,705,207 describes dilute aqueous acid solutions of gluten or gluten-derived protein.

US 5,736,178 describes formation of a gliadin based colloidal dispersion by addition of small amount of absolute ethanol. By adding ethanol, the dispersion remained free of microbial growth for months at ambient storage conditions.

EP 0744132 describes a process for hydrolysing a proteinaceous substrate devoid of viable mesophilic micro-organisms and spores in a sterile system with a sterile enzyme preparation.

US 6,197,353 describes a preparation of proteinaceous suspensions whereby a preservative such as sodium benzoate is added. Furthermore, the suspensions are highly diluted.

EP 0852910 relates to a process for preparing a nitrogenous composition and in said process wheat gluten is mixed with steepwater obtained from the maize starch industry. Due to the presence of steepwater, the suspensions contain sulphur dioxide.

US 5,145,702 relates to a process for making protein microparticles having a particle size of about 200 microns or less. The microparticles can be dried for transport and/or storage and then reconstituted, or hydrated, prior to use.

US 4,129,644 relates to a process for the production of a vegetable based sweetened condensed milk in which a vegetable protein in the form of an aqueous solution or suspension is subjected to partial enzymatic hydrolysis and the mixture is containing 8 to 18 parts by weight of the treated protein.

The Research Disclosure 1981, no. 20151, XP-002237194 describes that storage-stable soybean curd food products can be prepared by blending or mixing dehydrated food substances, like meat and vegetables, with soybean protein curd.

The Derwent Abstract for JP 2001-017119 describes a mayonnaise prepared by dispersing concentrated soybean protein in weak aqueous alkaline solution and treatment with a protein hydrolase.

GB 2020666 relates to a process for removing extraneous matter from a vegetable protein material by subjecting a slurry of the protein material to centrifugation. Following centrifugation, the slurry is subjected to a conventional dewatering process to concentrate its solids content and to permit the vegetable protein material more easily to be dried. Specific applications include its use as a bulking agent.

There is a need for having a simple process for preparing liquid highly concentrated vegetable protein suspensions that are microbial stable and free of any preservatives.

The current invention provides a process for preparing these microbial stable vegetable protein suspensions and their use in food, feed and cosmetic products.

### Summary of invention

The invention relates to a process for preparing a vegetable protein suspension wherein the process comprises an evaporation step until said suspension has a water activity of from 0.50 to 0.90, preferably from 0.50 to 0.85, which vegetable protein suspension is microbial stable without the addition of preservatives.

The invention preferably relates to a process wherein before and/or after the evaporation step, a heat-treatment is taking place.

The invention further preferably relates to a process which comprises the following steps:
a) hydrolysing vegetable protein into a suspension containing hydrolysed protein;
b) optionally purifying the suspension by membrane filtration;
c) evaporating until the suspension has a water activity of from 0.50 to 0.90;
d) heat treating the suspension; and
e) optionally storing the heat-treated suspension aseptically.

The invention preferably relates to a process wherein in step a) the hydrolysing step is an enzymatic conversion.

The invention preferably relates to a process wherein in step a) hydrolysis is enzymatic and is continued until the vegetable protein is hydrolysed to a degree of hydrolysis (DH) of from 5 to 90, preferably from 5 to 60, more preferably from 5 to 40.

The invention preferably relates to a process wherein the heat treatment is pasteurisation, sterilisation, or ultra-high-temperature treatment.

The present invention further preferably relates to a process wherein the vegetable protein is selected from proteins from sunflower, rapeseed, linseed, peanut, bean, soybean, pea, lupin, alfalfa, corn, wheat, rice, oat, rye, sorghum, their crossbreds and mixtures thereof.

Furthermore, the invention relates to vegetable protein suspensions obtainable according to the process described previously.

In addition, the invention describes the use of the vegetable protein suspension for the preparation of food products, feed products, fermentation media or cosmetic products.

The invention further relates to the aforementioned use of the vegetable protein suspension as a carrier, as a base for a taste improver or flavour enhancer, as a functional ingredient or as a fermentation nutrient.

The food products are preferably selected from bouillon, desserts, cereal bars, confectionary, sports drinks, dietary products and enteral nutrition products.

The feed products are preferably selected from feed for young animals, feed for piglets, feed for calves and feed for pets.

The cosmetic products are preferably selected from products for body care and shampoos.

Furthermore, the current invention relates to wheat protein suspensions obtainable according to the present disclosed process.

It further relates to the use of such a wheat protein suspension as a carrier, as a base for a taste improver or flavour enhancer, as a functional ingredient or as a fermentation nutrient.

### Description of figure

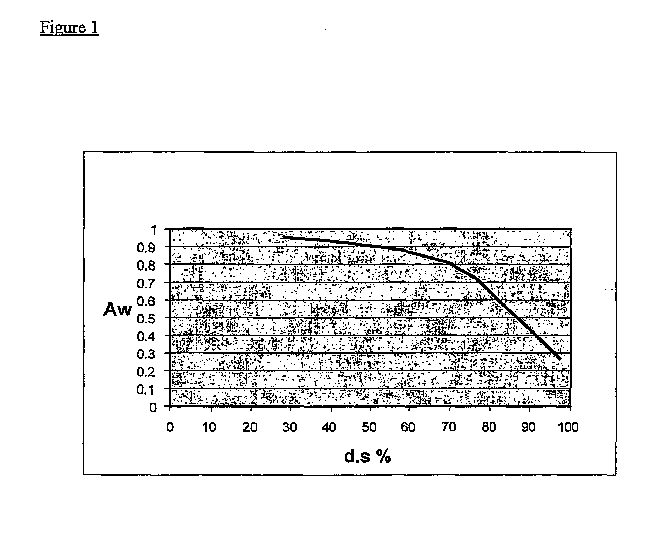

Figure 1 shows the relationship between the water activity of a protein suspension and the dry substance of the protein suspension (degree of hydrolysis is 36). It indicates the stability at a water activity of from 0.50 to 0.90 and at high dry substance.

### Detailed description

The invention relates to a process for preparing a vegetable protein suspension wherein the process comprises an evaporation step until said suspension has a water activity from 0.50 to 0.90, preferably from 0.50 to 0.85, which vegetable protein suspension is microbial stable without the addition of any preservatives.

The water activity (a_{w}) is expressed as the ratio of the water vapour pressure of the product (p) to that of pure water (pₒ) measured at the same temperature, and the value ranges from 0 to 1.

The current disclosed process allows microbial stable vegetable protein suspensions to be obtained which are highly concentrated and which do not need the addition of any preservative to obtain a long shelf-lifetime. The suspensions can be considered as being salt fee, containing no lactic acid, being free of sulphur dioxide, free of any common preservative, free of any trace of alcohol or solvent, or whatever additive which would be considered to be a preservative.

The suspensions preferably have concentrations of at least 50% dry substance, more preferably higher than 55% dry substance.

The current invention preferably relates to a process wherein before and/or after the evaporating step, a heat-treatment is carried out. Such a heat treatment can be of any kind, such as for example UHT treatment, pasteurisation or sterilisation.

The current invention further, preferably, relates to a process which comprises the following steps:
a) hydrolysing vegetable protein into a suspension containing hydrolysed protein;
b) optionally purifying the suspension by membrane filtration;
c) evaporating until the suspension has a water activity of from 0.50 to 0.90;
d) heat-treating the suspension; and
e) optionally storing the heat-treated suspension aseptically.

Preferably the evaporation in step c) is carried out until the suspension has a water activity of from 0.50 to 0.85.

The vegetable protein is preferably selected from leguminous based proteins, proteins from proteaginous plants and cereal based proteins, their crossbreds and mixtures thereof. The proteins from leguminous plants preferably selected from the group consisting of proteins from bean, soybean, pea, lupin and alfalfa. The proteaginous plants are preferably sunflower, rapeseed, linseed and peanut. The cereal-based proteins are preferably obtained from corn, wheat, rice, rye, oat and sorghum. The process of the current invention is suitable for mixtures of the aforementioned vegetable proteins. Preferably the vegetable protein is derived from wheat and the process relates to the treatment of vital wheat gluten.

The hydrolysis of the proteins or protein mixture of the present invention is performed by acid or enzymatic hydrolysis. In the case of acid hydrolysis, the solution is acidified to a pH below 3 and heated for a sufficient amount of time to hydrolyze the protein.

Optionally, insolubles can be removed by treatment with membrane filtration. Said membrane filtration can be press filtration, microfiltration or ultrafiltration.

After the heat treatment, the protein suspension can be directly applied for preparing food, feed, fermentation, media and/or cosmetic products, or it can be stored before use.

The current invention preferably relates to a process wherein in step a) hydrolysis is carried out enzymatically and is continued until vegetable protein is hydrolysed to a degree of hydrolysis (DH) of from 5 to 90, preferably from 5 to 60, more preferably from 5 to 40.

In enzymatic hydrolysis the protein solution is brought to a temperature and pH which are applied to the type of enzyme used. In general this is indicated by the enzyme supplier.

The hydrolysis is followed by determining the degree of hydrolysis. The hydrolysis is preferably allowed to proceed until a DH of from 5 to 90 is achieved.

The enzymes used for the present hydrolysis are hydrolases, generally peptidases (proteases). The peptidases may be selected from the group consisting of carboxy peptidases, amino peptidases, prolyl-dipeptidyl peptidase, prolinase, dipeptidyl peptidase IV, and mixtures thereof.

Peptidases are synonymous with peptide hydrolases for the entire group of enzymes that hydrolyse peptide bonds. Two sets of subclasses of peptidases are recognised comprising exopeptidases and endopeptidases. These endopeptidases now include the previously known proteinases. Preferably, enzymes from bacterial, mammalian, fruit or leguminous origin are used.

Further examples of suitable enzymes include Alkalase^{™}, Neutrase^{™}, Amano Pro M^{™} etc.

The current invention has the advantages that commercially based peptidases and no sterile preparations of the enzyme is required for obtaining a microbial stable vegetable protein suspension.

The current invention relates to a process wherein the heat treatment is preferably pasteurisation, sterilisation or ultra-high-temperature (UHT).

The current invention provides a vegetable protein suspension obtainable by the current disclosed process which suspensions have a water activity of from 0.50 to 0.90, and are microbial stable without the addition of any preservatives.

The suspension can be used directly as such in food products, feed products, fermentation media or cosmetic products. The preparation of said product is facilitated by applying the concentrated microbial stable vegetable protein suspension of the current invention. In fact, the microbial stable vegetable protein suspension can be used as carrier for e.g. vitamins, it can be used as functional ingredient or as the base for preparing bouillon, of very high free amino acids, which in turn can be used e.g. as taste improver or flavour enhancer.

The vegetable protein suspension is a suitable base as fermentation nutrient and can be applied as suitable nutrient in the preparation of enzymes. Additionally, the vegetable protein suspension can be subjected to any further treatment of said vegetable protein suspension, whereby the treated product is used in food products, feed products, fermentation media or cosmetic products. In food products in particular, the microbial stable highly concentrated vegetable protein suspension can be used as functional ingredient.

The food products are preferably selected from bouillon, desserts, cereal bars, confectionary, sports drinks, dietary products and enteral nutrition products. In dietary products, the use of the vegetable protein suspension is particularly useful when the amount of sweeteners in the food products has to be reduced for dietary reasons.

In fact, the preparation of any food product based upon a vegetable protein can be simplified by applying a concentrated liquid containing the vegetable protein in comparison to a process based upon dry protein powder. Furthermore, the current suspensions are microbial stable and can be stored for a long time without the need to add any preservatives. For the preparation of bouillon, the microbial stable vegetable protein suspension can be used as such or can be subjected to further treatment such as fermentation before the preparation of the bouillon.

The feed products are preferably selected from feed for young animals, feed for piglets, feed for calves and feed for pets.

Furthermore, the cosmetic products are preferably selected from products for body care and shampoos. The preparation of these cosmetic products is ameliorated by applying the microbial stable vegetable protein suspension of the current invention.

Furthermore, the current invention relates to wheat protein suspensions obtainable according to the present disclosed process.

It further relates to the use of wheat protein suspensions as carrier, as a base for taste improver or flavour enhancer, as a functional ingredient or as a fermentation nutrient.

The specific applications as previously mentioned for the vegetable protein suspensions are equally applicable for the wheat protein suspensions.

The current invention has the following advantages:
- A simple process for preparing protein suspensions which are microbial stable without the addition of preservatives or without the need of sterile preparations of enzymes.
- Due to the absence of any preservatives, the product has no off-taste and is exposed to less risks of Maillard reaction, which results in products that are better suitable for fermentation and food applications
- A cost-effective processing which is avoiding any drying step. No spray-drying or ringdrying step is involved.
- The preparation of the food, feed, and/or cosmetic products based upon-these vegetable protein suspensions is simplified, since a re-slurry of any powder can be avoided.
- The vegetable protein suspension can be applied as functional ingredient or carrier.

The current invention is illustrated by way of the following examples.

### Example 1

35 kg wheat gluten (Gluvital 21000 from Cerestar) was poured in 187L of water at 50°C. After homogenisation and pH adjustment at 4.5 with HCl (10%). 167 g peptidase Amano Pro M^{™} is added. After 2h, the same peptidase amount was added. 2 h later, pH is adjusted to 5 by adding NaOH (1050 and 67 g Wheatzyme WS^{™} (Rhodia) was added and reaction continued for 1 h. After 5h total reaction time, the reaction mixture was heated to 85°C, and kept at 85°C for 10 min. After cooling at 50°C, the insoluble part was removed by decantation and centrifugation. The solution was concentrated to 73.5% d.s. by evaporation under vacuum.

The dry substance (d.s.) was determined with Karl-Fisher.

Degree of hydrolysis (DH) of the gluten syrup was 28, determined according to the OPA method (ref. 'OPA-methode ter bepaling van de hydrolysegraad van weieiwithydrolysaten.' D.G. Schmidt, A.J.P. Robben. VMT (Voedingmiddelentechnologie), 1993, 19, 13-15.28
Protein content was 74.5%/d.s determined with Kjedhal method.
FAN content (Free amino nitrogen) was determined with Ninhydrin method, and was 1.7%/d.s.
Total amino acids and free amino acids contents have been determined by HPLC after derivatisation with AccQ-Tag (Waters). The free amino acids content is 14.8%/d.s.
The determined composition is displayed in tables land 2.

**Tab. 1**

| TOTAL Amino acids | %/d.s. |
|---|---|
| L-alanine | 2.31 |
| L-arginine | 4.40 |
| L-aspartic acid | 2.93 |
| L-glutamic acid | 33.05 |
| Glycine | 2.87 |
| L-histidine | 1.71 |
| L-isoleucine | 3.04 |
| Leucine | 6.14 |
| L-lysine.HCl | 1.53 |
| L-phenylalanine | 5.04 |
| L-proline | 11.36 |
| L-serine | 4.81 |
| L-threonine | 2.49 |
| L-tyrosine | 2.94 |
| L-valine | 3.43 |
| Total AA | 88.00 |

**Tab.2**

| FREE Amino Acids | %/d.s. |
|---|---|
| L-alanine | 0.44 |
| L-arginine | 1.49 |
| L-aspartic acid | 0.18 |
| L-glutamic acid | 0.56 |
| Glycine | 0.09 |
| L-histidine | 2.13 |
| L-isoleucine | 0.88 |
| Leucine | 2.89 |
| L-lysine.HCl | 0.95 |
| L-phenylalanine | 1.36 |
| L-proline | 0.57 |
| L-serine | 0.60 |
| L-threonine | 0.46 |
| L-tyrosine | 1.14 |
| L-valine | 1.04 |
| Free AA | 14.78 |

Water Activity was measured with an Aqua Lab Cx-2 apparatus (Labcell), at 23°C. 10 g of the product was brought in a plastic cap and placed in the Aqua Lab, at 23°C. After the 5 minutes the measurement is displayed on the screen. The reading gave a value of 0.74 for the water activity.
Water activity was low enough to avoid bacteria activity and the syrup was stable during storage. The syrup remained microbial stable for at least 1.5 year at 8°C.

### Example 2

25 kg wheat gluten (Gluvital 21000 from Cerestar) was poured in 135L of water at 55°C. After homogenisation 120 g peptidase Amano Pro M^{™} was added to the slurry. After 24-h reaction while stirring, pH is adjusted to 5 by adding NaOH (10%) before heat treatment at 85°C for 10 min. After cooling to 50°C, the insoluble part was removed by filtration. The solution was concentrated by evaporation under vacuum to a concentration of 77.7% d.s.

Degree of hydrolysis of the gluten syrup is 36.

The viscosity of the protein solution (measured with a Haake Rheostress in function of shear rate) was 5 Pas at 50°C and around 20 Pas at 25°C.

Water activity, measured at 23°C was 0.72, which was low enough to avoid bacteria activity and the syrup was stable during storage.

Figure 1 displays the water activity as a function of the dry substance of the protein suspension.

## Claims

1. A process for preparing a vegetable protein suspension **characterised in that** the process comprises an evaporation step until said suspension has a water activity of from 0.50 to 0.90, preferably from 0.50 to 0.85, and **in that** the vegetable protein suspension is microbial stable without the addition of preservatives.

2. A process according to claim 1 **characterised in that** it comprises a heat treatment step before and/or after the evaporation step.

3. A process according to either claim 1 or claim 2, **characterised in that** the process comprises the following steps:
a) hydrolysing vegetable proteins into a suspension containing hydrolysed proteins;
b) optionally purifying the suspension by membrane filtration;
c) evaporating until the suspension has a water activity of from 0.50 to 0.90;
d) heat-treating the suspension; and
e) optionally storing the heat-treated suspension aseptically.

4. A process according to claim 3, **characterised in that** in step a) hydrolysis is an enzymatic conversion.

5. A process according to either claim 3 or claim 4, **characterised in that** in step a) hydrolysis is enzymatic and is continued until the vegetable protein is hydrolysed to a degree of hydrolysis (DH) of from 5 to 90, preferably from 5 to 60, more preferably from 5 to 40.

6. A process according to any one of claims 2 to 5, **characterised in that** the heat-treatment is pasteurisation, sterilisation or ultra-high-temperature treatment.

7. A process according to any one of claims 1 to 6, **characterised in that** the vegetable protein is selected from proteins from bean, soybean, pea, lupin, alfalfa, sunflower, rapeseed, linseed, peanut, corn, wheat, rice, oat, rye, sorghum, their crossbreds and mixtures thereof.

8. Vegetable protein suspensions obtainable according to the process described in any one of claims 1 to 7.

9. Use of a vegetable protein suspension according to claim 8 for the preparation of food products, feed products, fermentation media or cosmetic products.

10. Use of a vegetable protein suspension according to claim 9 as carrier.

11. Use of a vegetable protein suspension according to claim 9 as a base for a taste improver or flavour enhancer.

12. Use of a vegetable protein suspension according to claim 9 as a functional ingredient.

13. Use of a vegetable protein suspension according to claim 9 as a fermentation nutrient.

14. Use of a vegetable protein suspension according to any one of claims 9 to 12, **characterised in that** said food products are selected from bouillon, desserts, cereal bars, confectionary, sports drinks, dietary products and enteral nutrition products.

15. Use of a vegetable protein suspension according to any one of claims 9 to 12, **characterised in that** said feed products are selected from feed for young animals, feed for piglets, feed for calves and feed for pets.

16. Use of a vegetable protein suspension according to any one of claims 9 to 12 **characterised in that** said cosmetic products are selected from products for body care and shampoos.

17. Wheat protein suspension obtainable according to the process described in any one of claims 1 to 6.

## Patentansprüche

1. Verfahren zur Herstellung einer Pflanzenproteinsuspension, **dadurch gekennzeichnet, dass** das Verfahren einen Verdampfungsschritt bis die Suspension eine Wasseraktivität von 0,50 bis 0,90, vorzugsweise 0,50 bis 0,85, aufweist, umfasst und **dadurch**, dass die Pflanzenproteinsuspension ohne die Zugabe von Konservierungsmitteln mikrobiell stabil ist.

2. Verfahren nach Anspruch 1, **dadurch gekennzeichnet, dass** es einen Wärmebehandlungsschritt vor und/oder nach dem Verdampfungsschritt umfasst.

3. Verfahren nach entweder Anspruch 1 oder Anspruch 2, **dadurch gekennzeichnet, dass** das Verfahren die nachstehenden Schritte umfasst:
a) Hydrolysieren von Pflanzenproteinen zu einer hydrolysierte Proteine enthaltenden Suspension;
b) gegebenenfalls Reinigen der Suspension durch Membranfiltration;
c) Verdampfen, bis die Suspension eine Wasseraktivität von 0,50 bis 0,90 aufweist;
d) Wärmebehandeln der Suspension; und
e) gegebenenfalls aseptisches Lagern der wärmebehandelten Suspension.

4. Verfahren nach Anspruch 3, **dadurch gekennzeichnet, dass** die Hydrolyse in Schritt a) eine enzymatische Umsetzung ist.

5. Verfahren nach entweder Anspruch 3 oder Anspruch 4, **dadurch gekennzeichnet, dass** die Hydrolyse in Schritt a) enzymatisch ist und fortgesetzt wird, bis das Pflanzenprotein zu einem Hydrolysegrad (DH) von 5 bis 90, vorzugsweise 5 bis 60, bevorzugter 5 bis 40, hydrolysiert ist.

6. Verfahren nach einem der Ansprüche 2 bis 5, **dadurch gekennzeichnet, dass** die Wärmebehandlung Pasteurisierung, Sterilisierung oder Ultra-Hochtemperatur-Behandlung ist.

7. Verfahren nach einem der Ansprüche 1 bis 6, **dadurch gekennzeichnet, dass** das Pflanzenprotein aus Proteinen von Bohne, Sojabohne, Erbse, Lupine, Luzerne, Sonnenblume, Rapssamen, Leinöl, Erdnuss, Mais, Weizen, Reis, Hafer, Roggen, Sorghum, deren Kreuzungen und Gemischen davon ausgewählt ist.

8. Pflanzenproteinsuspensionen, erhältlich gemäß dem in einem der Ansprüche 1 bis 7 beschriebenen Verfahren.

9. Verwendung einer Pflanzenproteinsuspension nach Anspruch 8 für die Herstellung von Lebensmittelprodukten, Futterprodukten, Fermentationsmedien oder kosmetischen Produkten.

10. Verwendung einer Pflanzenproteinsuspension nach Anspruch 9 als Träger.

11. Verwendung einer Pflanzenproteinsuspension nach Anspruch 9 als eine Grundlage für einen Geschmacksverbesserer oder Aromaverstärker.

12. Verwendung einer Pflanzenproteinsuspension nach Anspruch 9 als einen funktionellen Bestandteil.

13. Verwendung einer Pflanzenproteinsuspension nach Anspruch 9 als Fermentationsnährstoff.

14. Verwendung einer Pflanzenproteinsuspension nach einem der Ansprüche 9 bis 12, **dadurch gekennzeichnet, dass** die Lebensmittelprodukte aus Brühe, Desserts, Getreideriegeln, Süßwaren, Sportgetränken, Diätprodukten und enteralen Ernährungsprodukten ausgewählt sind.

15. Verwendung einer Pflanzenproteinsuspension nach einem der Ansprüche 9 bis 12, **dadurch gekennzeichnet, dass** die Futterprodukte aus Futter für Jungtiere, Futter für Ferkel, Futter für Kälber und Futter für Haustiere ausgewählt sind.

16. Verwendung einer Pflanzenproteinsuspension nach einem der Ansprüche 9 bis 12, **dadurch gekennzeichnet, dass** die Kosmetikprodukte aus Produkten zur Körperpflege und Shampoos ausgewählt sind.

17. Weizenproteinsuspension, erhältlich nach dem in einem der Ansprüche 1 bis 6 beschriebenen Verfahren.

## Revendications

1. Processus de préparation d'une suspension de protéines végétales **caractérisé en ce que** le processus comprend une étape d'évaporation jusqu'à ce que ladite suspension ait une activité de l'eau de 0,50 à 0,90, de préférence de 0,50 à 0,85 et **en ce que** la suspension de protéines végétales est stable du point de vue microbien sans l'ajout de conservateurs.

2. Processus selon la revendication 1, **caractérisé en ce qu'**il comprend une étape de traitement thermique avant et/ou après l'étape d'évaporation.

3. Processus selon la revendication 1 ou la revendication 2, **caractérisé en ce que** le processus comprend les étapes suivantes :
a) hydrolyse de protéines végétales afin d'obtenir une suspension contenant des protéines hydrolysées ;
b) en option, purification de la suspension par filtration par membrane ;
c) évaporation jusqu'à ce que la suspension présente une activité de l'eau de 0,50 à 0,90 ;
d) traitement thermique de la suspension ; et
e) en option, stockage aseptique de la suspension traitée thermiquement.

4. Processus selon la revendication 3, **caractérisé en ce que**, à l'étape a), l'hydrolyse est une conversion enzymatique.

5. Processus selon la revendication 3 ou la revendication 4, **caractérisé en ce que**, à l'étape a), l'hydrolyse est enzymatique et elle est continuée jusqu'à ce que la protéine végétale soit hydrolysée avec un degré d'hydrolyse (DH) de 5 à 90, de préférence de 5 à 60, de préférence de 5 à 40.

6. Processus selon l'une des revendications 2 à 5, **caractérisé en ce que** le traitement thermique est une pasteurisation, une stérilisation ou un traitement à ultra-haute température.

7. Processus selon l'une des revendications 1 à 6, **caractérisé en ce que** la protéine végétale est sélectionnée parmi des protéines telles que des protéines de haricot, de soja, de pois, de lupin, de luzerne, de tournesol, de colza, de graine de lin, d'arachide, de maïs, de blé, de riz, d'avoine, de seigle, de sorgho, leurs hybrides et des mélanges de ces protéines.

8. Suspension de protéines végétales pouvant être obtenue selon le processus décrit dans une des revendications 1 à 7.

9. Utilisation d'une suspension de protéines végétales selon la revendication 8 pour la préparation de produits alimentaires, d'aliments pour animaux, de milieux de fermentation ou de produits cosmétiques.

10. Utilisation d'une suspension de protéines végétales selon la revendication 9 en tant que porteur.

11. Utilisation d'une suspension de protéines végétales selon la revendication 9 en tant que base pour un exhausteur de goût ou pour un exhausteur d'arôme.

12. Utilisation d'une suspension de protéines végétales selon la revendication 9 en tant qu'ingrédient fonctionnel.

13. Utilisation d'une suspension de protéines végétales selon la revendication 9 en tant que nutriment de fermentation.

14. Utilisation d'une suspension de protéines végétales selon l'une des revendications 9 à 12, **caractérisée en ce que** lesdits produits alimentaires sont sélectionnés parmi des bouillons, des desserts, des barres de céréales, des confiseries, des boissons sportives, des produits diététiques et des produits nutritionnels entéraux.

15. Utilisation d'une suspension de protéines végétales selon l'une des revendications 9 à 12, **caractérisée en ce que** lesdits aliments pour animaux sont sélectionnés parmi des aliments pour jeunes animaux, des aliments pour porcelets, des aliments pour veaux et des aliments pour animaux domestiques.

16. Utilisation d'une suspension de protéines végétales selon l'une des revendications 9 à 12, **caractérisée en ce que** lesdits produits cosmétiques sont sélectionnés parmi des produits pour soins corporels et des shampooings.

17. Suspension de protéines de blé pouvant être obtenue selon le processus décrit dans l'une des revendications 1 à 6.
